# EUROPEAN PATENT SPECIFICATION

(11) **EP 0 991 930 B1**
(45) Date of publication and mention of the grant of the patent: **16.06.2004**
(21) Application number: 98932841.4
(22) Date of filing: 24.06.1998
(51) Int. Cl.: G01N 1/28, G01N 35/10, H01J 49/16

(54) **HIGH DENSITY SAMPLE HOLDER FOR ANALYSIS OF BIOLOGICAL SAMPLES**
PROBENTRÄGER HOHER DICHTE FÜR DIE ANALYSE BIOLOGISCHER PROBEN
PORTE-ECHANTILLON A HAUTE DENSITE DESTINE A L'ANALYSE DE PRELEVEMENTS BIOLOGIQUES

(30) Priority: 26.06.1997 US 50840 P
(43) Date of publication of application: 12.04.2000
(73) Proprietor: PERSEPTIVE BIOSYSTEMS, INC., Framingham, MA 01710 (US)
(72) Inventor: REGNIER, Fred, E., West Lafayette, IN 47906 (US); AFEYAN, Noubar, Lexington, MA 02173 (US); VESTAL, Marvin, L., Framingham, MA 01701 (US)
(74) Representative: Henkel, Feiler & Hänzel
(86) International application number: PCT/US1998/013169
(87) International publication number: WO 1999/000657

(56) References cited:
- EP-A- 0 347 579
- WO-A-95/11755
- DE-A- 4 233 231
- DE-C- 4 408 034
- US-A- 5 498 545
- O'DONNELL-MALONEY M J ET AL: "The development of microfabricated arrays for DNA sequencing and analysis" TRENDS IN BIOTECHNOLOGY, vol. 14, no. 10, October 1996, page 401-407 XP004035731
- PERSEPTIVE BIOSYSTEMS CATALOG [ONLINE]: "MASS SPECTROMETRY: VOYAGER BIOSPECTROMETRY WORKSTATIONS " AVAILABLE FROM INTERNET:<URL: HTTP://WWW.PBIO.COM/CAT/ANALYZ/MASSSPEC/VO YAGER.HTM, 13 May 1997, XP002078589

## Description

### Related Application

This application claims priority to provisional application U.S.S.N. 60/050,840 filed on June 26, 1997.

### Field of the Invention

The invention relates to a sample holder for chemical analysis and synthesis of samples and more specifically to a high density sample holder for holding and maintaining separation of multiple samples during a chemical analysis or synthesis process.

### Background of the Invention

Molecular biology comprises a wide variety of techniques for the analysis of biological samples including nucleic acids and proteins, many of which form the basis of clinical diagnostic assays. These techniques, for example, include nucleic acid hybridization analysis; restriction enzyme analysis, genetic sequence analysis, ligand/receptor binding assays, and separation and purification of nucleic acids and proteins. Many investigatory molecular biology techniques involve carrying out numerous operations on a large number of samples. These operations are often complex and time consuming and generally require a high degree of accuracy.

Matrix-assisted laser desorption ionization (MALDI) is a technique that allows very large molecules, such as DNA fragments and proteins, to be desorbed from a solid sample and ionized without significant decomposition. Coupled with mass spectrometry, the MALDI technique allows the molecular weights of biological polymers and other large molecules, including industrial polymers, to be precisely determined.

Typically, in a MALDI process, a sample plate contains one or a plurality of small aliquots of a mixture of the sample to be analyzed and an appropriate matrix. After the samples on the sample plate are dried, the sample plate is placed inside a vacuum chamber. A laser beam strikes each sample to desorb and ionize sample molecules, thereby creating an ion cloud for each sample. Ions in the cloud are extracted by electrical fields and travel toward a detector. Ions of different masses require different times to travel toward the detector. Therefore, by measuring the time it takes for an ion beam to reach the detector, one can determine the molecular weight of the sample. The laser beam strikes one sample spot at a time typically by moving the sample plate relative to the laser beam.

In general, a sample plate used in a MALDI process is a substrate having a flat surface. A conventional sample plate has several drawbacks. The conventional sample plate may allow remixing of previously separated samples. When the samples are first placed on the sample plate, the samples may be physically separated and distinguishable. However, after the sample solution is deposited on the sample plate, the samples may spread by diffusion and become mixed with other samples, because there is no barrier between the samples. To avoid sample diffusion and mixing, samples may be sufficiently spaced apart. When the samples are spaced apart, however, sample density on the sample plate is reduced, and thus multiple plates may be required to analyze a large number of samples. Since only one sample plate is placed in a MALDI chamber at a time, and since it takes a while to create the necessary vacuum in the chamber, rapid analysis of a large number of samples becomes difficult.

Another problem with the conventional sample plate is that samples are wasted. A sample droplet placed on the sample plate typically comprises a relatively large surface area as compared to the laser beam diameter. The sample droplet can cover about 2 mm², and a laser beam diameter typically is approximately 100 µm². Thus the laser beam strikes only a tiny fraction of the sample, wasting the rest of the sample. Yet another problem with the conventional sample plate is that when multiple samples are placed on the plate, it is difficult to address each sample on the plate. The ability to address each sample is important as.samples that are individually addressable can be selectively analyzed. Still another problem with the conventional sample plate is that the analysis can be slow, because the sample may not uniformly cover the surface of the sample plate. In preparing samples for MALDI, a small amount of sample typically is mixed with a large amount of matrix liquid. The mixture is placed on the sample plate and allowed to spread and dry on the sample plate surface. Since the mixture comprises a small amount of the sample, certain areas of the plate surface may not have any sample at all when the sample dries. Therefore, during a MALDI analysis, the laser beam must strike multiple spots in order to gather enough data from spots supporting the sample. In general, a MALDI analysis for a sample takes a minimum of 30 seconds.

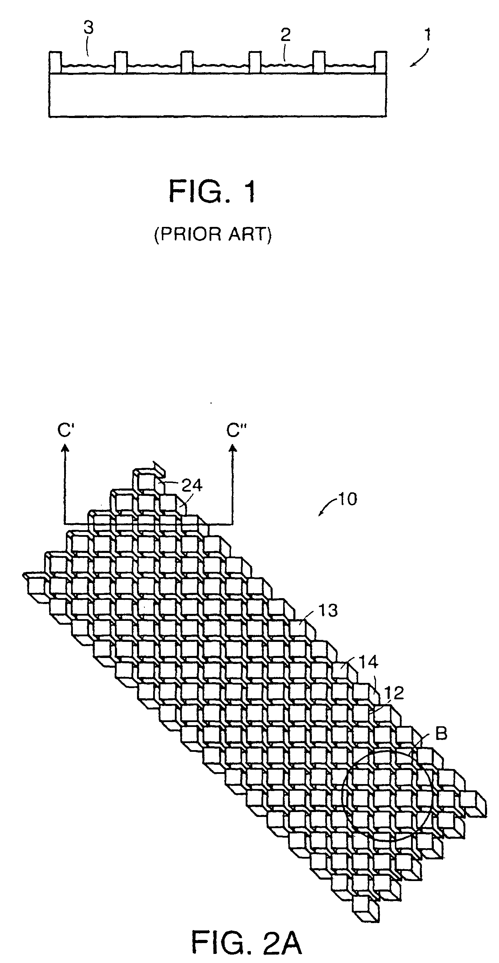

U.S. Patent No. 5,498,545 describes a sample plate that comprises physically separated sample spots. The sample spots are separated either by etching multiple holes in a substrate as shown in Figure 1, or by placing pins on a substrate. A spot diameter is in the millimeter range. These spots are macroscopic in area and are much larger than the area of the laser beam.

US-A-5498545 generally teaches a system for analyzing multiple samples. The system has a mass spectrometer for analyzing each sample when positioned within a sample receiving chamber and a laser source that strikes each sample with a laser pulse to desorb and ionize sample molecules. The system also includes a sample support.

The document describes three different examples of sample supports. The first sample support has a number of photoetched wells. The second sample support has a number of sample spots which are electroplated areas. Each sample well or spot is described as being about 1-2.5 mm in diameter. The third sample support has removable vertical pins.

DE-A-4233231 generally teaches a system for detecting and quantifying organic compounds. The system includes a sample table on which one or more samples may be deposited, a light source for irradiating the samples, and a spectrum-measuring device. The sample table includes a thin film mounted on an infrared ray-reflecting member. The thin film may contain pinholes that pass through it, onto which a solution containing the sample is deposited. The pinholes serve as nuclei for condensing the sample, preventing diffusion of the sample across the thin film. Alternatively, the thin film may contain denatured zones created by laser irradiation, onto which the solution is deposited.

EP-A0347579 generally teaches a structure for containing small amounts of a substance. The structure includes a block with one or more depressions and a cover with humps corresponding to the depressions. The depressions may be etched into the surface of the block using an anisotropic etching method. In each example of this document, the sample is placed in a depression in the block.

DE-A-4408034 generally relates to a method for mass spectrometric analysis of a sample that includes contacting an electrophoresis plate with a transfer membrane, i.e., "electroblotting".

Conventional sample plates and probes used in mass spectroscopy analysis in biological screening, as a holder for a library of biopolymers, or as a plate for biological synthesis or analysis also have flat surfaces, macroscopic sample spots, or wells. Therefore, some of the problems discussed with respect to MALDI sample plates such as sample diffusion, small sample density, and wasted samples also exist with these plates.

### Summarv of the Invention

According to the present invention the above object is achieved by a sample holder according to claim 1, a system for rapid analysis of a plurality of samples according to claim 17 and by a method for analyzing a biological sample according to claim 20. The dependent claims are related to further different aspects of the invention.

In one aspect, the present invention provides a sample holder that overcomes many of the problems of convention sample holders. The present sample holder supports a multiplicity of samples on a small space, while permitting physical separation of these samples. The present sample holder furthers allows each sample location to be addressable such that selective analysis or synthesis of a sample can be performed.

The sample holder comprises a substrate microfabricated to define a multiplicity of microscopic islands separated by at least one sump. The microscopic islands define sample support surfaces and the at least one sump inhibits transport of samples between adjacent sample support surfaces. In one embodiment, the at least one sump is a plurality of interconnected sumps forming a gutter, and each sump comprises at least one hole for drainage. In another embodiment, the plurality of interconnected sumps are disposed on a first surface of the substrate and the sample holder further comprises a second group of interconnected sumps disposed on the second surface of the substrate. The second group of interconnected sumps are offset from the first group of interconnected sumps such that a multiplicity of vertical holes that extend through the thickness of the substrate form where the first group of interconnected sumps intersect with the second group of interconnected sumps. In yet another embodiment, the multiplicity of islands comprises sub-islands separated by at least one sub-sump disposed on the sample support surface. In still another embodiment, the sample holder is disposed within the sample chamber of a matrix assisted laser desorption ionization mass spectrometer.

In another aspect, the invention features a system for rapid analysis of a plurality of samples. The system comprises a vacuum controllable chamber; a sample holder for disposition within the chamber for holding a plurality of samples, a laser source and a mass spectrometer. The sample holder comprises a substrate microfabricated to define a multiplicity of microscopic islands separated by at least one sump. The islands define sample support surfaces and the at least one sump inhibits transport of samples between adjacent surfaces. The laser source has means for generating and directing a laser beam for striking a sample on a sample support surface to desorb and ionize sample molecules therefrom. The mass spectrometer analyzes samples on the sample holder by detecting the mass thereof. In one embodiment, the optical means is the means for directing a laser beam. In another embodiment, the system further includes a mechanism for moving the sample holder relative to the laser beam such that each surface of the sample support surfaces is impinged by a stationary laser beam. In still another embodiment, each sample support surface has a surface area that is approximately equal to or smaller than a diameter of the laser beam striking each sample.

In still another aspect, the invention features a method for analyzing a biological sample. According to the method, a sample holder comprising a substrate microfabricated to define a multiplicity of microscopic islands defining sample support surfaces is provided. At least one sump, separates adjacent support surfaces and inhibits transport of samples between adjacent surfaces. A plurality of samples are placed in contact with the sample support surfaces, and an analysis step is performed on the biological sample. In one embodiment, the analysis step comprises detection by matrix assisted laser desorption ionization mass spectrometry. In another embodiment, the analysis step comprises immunoassay. In still another embodiment, the method further includes the step of fabricating a library of polymers on the sample holder such that each polymer is disposed on a sample support surface. The library of polymers may be a library of biopolymers such as peptides, oligonucleotides, or probes for biological screening.

### Brief Description of the Drawings

These and other advantages of the invention may be more clearly understood with reference to the specification and the drawings, in which:
Figure 1 shows a cross-section view of a prior art sample holder.
Figure 2A shows a perspective view of an embodiment of the sample holder of the present invention.
Figure 2B shows a top view of a section of the sample holder of Figure 2A.
Figure 2C shows a cross-section view of a section of the sample holder of Figure 2A cut through 2C'-2C".
Figure 3 A shows a top view of a section of an embodiment of the sample holder of the prevent invention.
Figure 3B shows a cross-section view of the sample holder of Figure 3A cut through 3B'-B".
Figure 3C shows a cross-section view of the sample holder of Figure 3A cut through 3C'-C".
Figure 4 illustrates inhibition of sample transport to adjacent sample support surfaces using the sample holder of Figure C.
Figure 5 shows a top view of an embodiment of the sample holder of the present invention.
Figure 6A shows a top view of a section of an embodiment of the sample holder of the present invention.
Figure 6B shows a cross-section view of the sample holder of Figure 6A cut through 6B'-6B".
Figure 7 shows a rear surface of the sample holder of Figure 2B.
Figure 8 shows a schematic diagram of a MALDI chamber.
Figure 9 illustrates a method of transferring samples onto the sample holder of the present invention.
Figure 10 shows a perspective view of an embodiment of the sample holder of the present invention.

### Detailed Description of the Invention

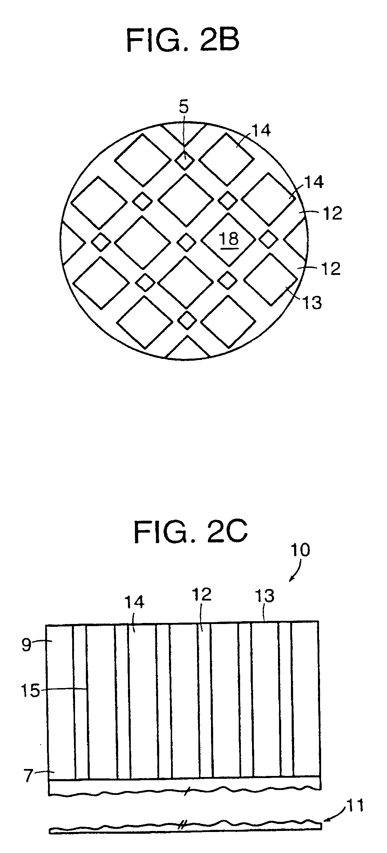

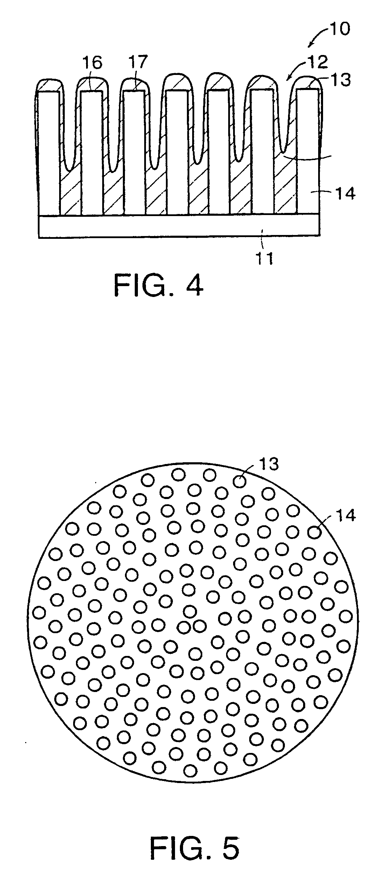

Referring to Figures 2A, 2B, 2C, a sample holder 10, constructed in accordance with the invention comprises a substrate 11 microfabricated to define a multiplicity of microscopic islands 14 defining upper sample support surfaces 13. The term "island" refers to a structure protruding from the substrate 11. A sample support surface 13 is an exposed surface on an island that typically is substantially parallel to the horizontal plane of the substrate 11, unlike prior art sample holders 1, which hold the samples 2 in the wells 3. At least one sump 12 separates the surfaces 13 of adjacent islands 14. The term "sump" refers to a recessed area between adjacent islands 14. The sump 12 is recessed below the surfaces 13 of the adjacent islands 14. In a preferred embodiment, the sump 12 is recessed by at least 10 microns. As illustrated in Figure 4, the sump 12 inhibits transport of samples between the surfaces 13 of the islands 14 by collecting the sample that transports (e.g., diffuses) away from one surface 16 towards an adjacent island surface 17. Thus excess sample applied to a surface 13 drains into the sump 12 and is less likely to mix with sample on an adjacent surface. In general, a sample placed on a portion of a surface tends to diffuse to neighboring portions of the surface over time. Referring to Figure 2C, the islands 14 connect to one another at a first end 7 by the substrate 11. However, the remainder of each island 14 is physically separated from the adjacent islands 14. Each island 14 has at least one exposed surface 13 for supporting a sample.

In one embodiment, the sumps 12 comprise at least one hole 5 for draining the samples that collect in the sumps 12 away from the sample holder 10 as shown in Figure 2B. For example, a vacuum may be applied to the back of the sample holder 10 to suck the material collecting in the sumps 12 out of the sumps 12. In a preferred embodiment, the sumps 12 in the sample holder 10 are interconnected to form a gutter as shown in Figures 2A, 2B, and 2C. A gutter better inhibits the samples from transporting towards adjacent island surfaces 13 by draining the samples that transport away from the sample support surfaces 13. The gutter is wide enough to minimize surface tension between the samples and the gutter surfaces to induce the samples to flow down to the bottom of the sumps 12 and to induce flow of the samples in the gutter for drainage.

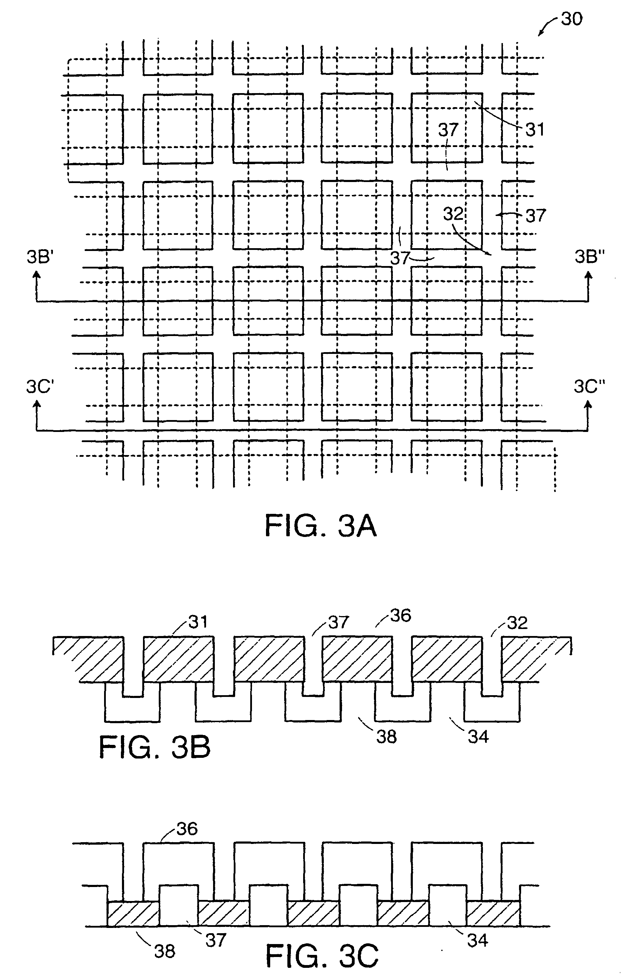

Referring to Figures 3A, 3B and 3C, in a preferred embodiment, the sample holder 30 drains the samples collected in the sumps 32. The sample holder 30 includes a first group of interconnected sumps 32 forming a first gutter and a second group of interconnected sumps 34 forming a second gutter. The first group of interconnected sumps 32 and the sample support surfaces 31 are disposed on the first surface of the substrate 36 and the second group of interconnected sumps 34 are disposed on the second surface of the substrate 38. The second group of interconnected sumps 34 are disposed offset from the first group of interconnected sumps 32 such that the first group of interconnected sumps 32 intersecting the second group of interconnected sumps 34 create a plurality of holes 37 that are substantially perpendicular to the substrate and that extend through the thickness of the substrate. In the embodiment shown in Figures 3A, 3B, and 3C, each sample support surface 31 is surrounded by four holes 37 for draining the samples away from the sample holder 30. The size and shape of the first group of interconnected sumps 32 may, but need not be the same as the size and shape of the second group of interconnected sumps 34.

In another embodiment, the sample holder comprises a substrate defining a plurality of sample support surfaces. Each sample support surface is surrounded by a plurality of vertical channels that extend through the substrate, such that excess sample placed on a sample support surface drains away from the sample surface through the channels.

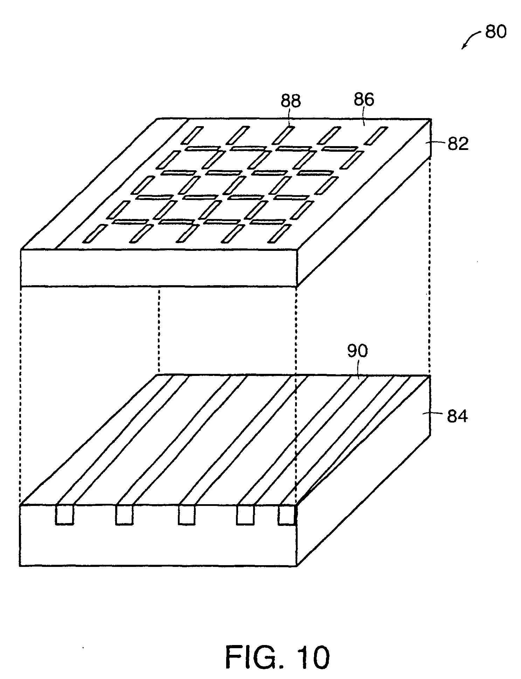

Referring to Figure 10, in still another embodiment, the sample holder 80 comprises a first substrate 82 and a second substrate 84 attached to the first substrate 82. The first substrate 82 comprises a plurality of sample support surfaces 86 and a plurality of vertical channels 88 adjacent to the sample support surfaces 86. The vertical channels 88 extend through the thickness of the first substrate 82. The second substrate 84 comprises a plurality of sumps 90 or interconnected sumps defining a gutter. The plurality of sumps 90 of the second substrate 84 are in communication with the plurality of vertical channels 88 of the first substrate 82.

In the embodiments of Figure 2A, 2B, and 2C, the islands 14 are substantially identical in size and shape and the sumps 12 also are substantially identical in size and shape. Uniformity in the size or shape of the islands 14, the sample support surfaces 13, or the sumps 12, although acceptable, is not a requirement of the present invention. In one exemplary embodiment, the sample support surface 13 areas on a sample holder 10 vary depending on a characteristic of a sample placed on each surface 13.

Each island 14 has a sample support surface area 13 that is microscopic in size. The term "microscopic" refers to an area less than about 10,000 µm², preferably less than about 5,000 µm², more preferably less than about 1000 µm² and in many embodiments less than 100 µm². Smaller sample support surface 13 areas along with narrow distances between adjacent islands 14 provide the advantage of increasing sample density on a sample holder 10. In one embodiment, the sample holder 10 comprises more than 1000 islands per cm² of substrate area 11. In a preferred embodiment, the sample holder 10 comprises more than 10,000 islands per cm² of substrate area. The selected height of an island 14 (or depth of the sump 12) depends in part on the intended sample volume to be placed on the sample support surface 13 of the island 14. The term "height" refers to the distance from a first end 7 to a second end 9 of an island 14. The height of an island 14 preferably is large enough to prevent the sample on the sample support surface 13 from transporting and reaching the adjacent island surfaces 13. The height of an island 14 and the distance between the island and an adjacent island 14 define the size of the sump 12 between the two islands. In one embodiment, the distance between adjacent islands 14 is less than approximately 100 µm. In preferred embodiments, the distance between adjacent islands is less than approximately 50 µm, but great enough to prevent a viscous liquid from bridging the channel between adjacent islands. In a preferred embodiment, the sumps 12 are deep and narrow as permissible by the state of fabrication. Existing fabrication technologies permit creation of a sump 12 having a depth that is 20 times greater than its width. For example, a sump 12 having a width of 10 microns may have a depth of upto 200 microns. Since dimensions of a sump 12 is limited by existing fabrication technologies, a greater depth along with a narrower width is expected with advances in such technologies.

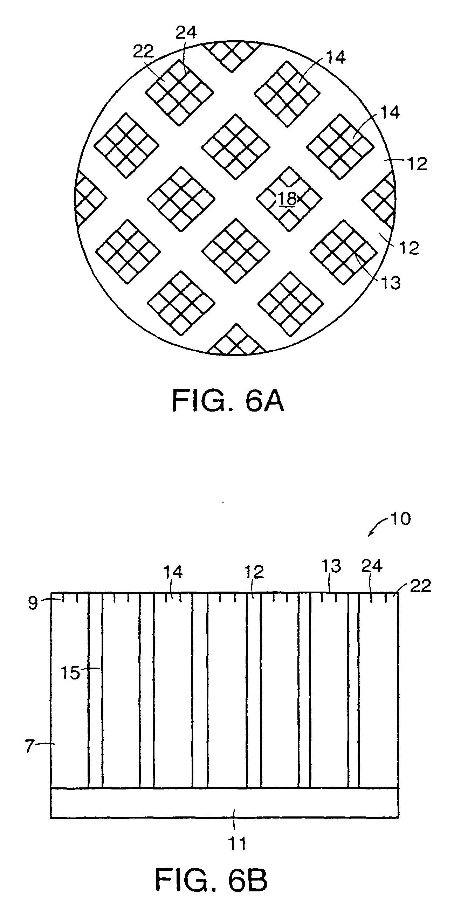

The islands 14 and the sample support surfaces 13 are individually addressable, for example, with a laser beam, according to the present invention. The sample holder 10 may have at least two or more reference points to assist in identification of sample locations. Furthermore, an island 14 or a sample support surface 13 is repeatedly addressable such that multiple analysis or synthesis can be performed on a sample disposed on a particular sample support surface 13 or a collection of adjacent surfaces. In one embodiment, the islands 14 on the sample holder 10 form an array. In the embodiment of Figures 2A, 2B and 2C, the islands 14 form a two dimensional array and the sample support surfaces 13 are substantially square. According to the present invention, the sample support surfaces 13 may be of any shape sufficient to support a sample. In the embodiment of Figure 5, the islands 14 form concentric islands 14, forming sample support surfaces 13 that are ring-shaped. This permits address of a particular surface by rotation of the sample holder 10 and radial movement of a device for use in approaching a particular surface. In the embodiment of Figures 6A and 6B, the islands 14 form sub-islands 22 on each sample support surface 13. The sub-islands 22 are separated by at least one sub-sump 24 disposed on the sample support surface 13. The configuration including sub-islands 22 permits placement of multiple samples on a sample support surface 13. The sub-islands 20 may form an array.

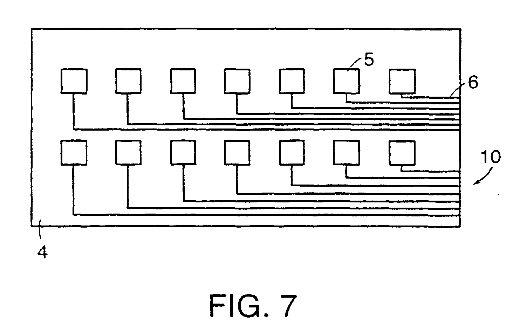

In another embodiment, voltage can be directed to specific sample support surfaces of the sample holder 10. Referring to Figure 7, a sample holder 10 has a plurality of drain holes 5 that extend though the thickness of the sample holder 10. Each drain hole 5 is disposed in a sump in between two or more adjacent islands. Metal leads 6 are microfabricated on a rear side 4 of the sample holder 10, and each lead 6 extends to a drain hole 5. At least some of the sample support surfaces and the walls of the sumps are metallized, such that votage can be directed to these support surfaces.

A variety of techniques can create the islands 14 and the sumps 12. In one embodiment, the islands 14 and the sumps 12 are created by etching the sumps 12. Both isotropic and anisotropic etching methods can be used to create the sumps 12, but anisotropic etching technique is preferred because anisotropic etching techniques are capable of creating deep, vertical, narrow channels. Anisotropic etching techniques, for example, include deep reactive ion etching, electron beam etching and LIGA (Lithographie Galvanoformung Abformung). These etching techniques are well known in the art. LIGA is a process that allows fabrication of three dimensional structures having high aspect ratios. The process involves four steps: irradiation, development, electroforming and resist stripping. Irradiation step involves irradiating a resist using laser, electron-beam or X-ray from a synchrotron radiation source. In the development step, a pattern is transferred into the resist and the resist is etched to reveal three dimensional structures comprising the resist material. In the electroforming step, a metallic mold is produced around the resist structures by electroplating. In the final step, the resist is stripped to reveal channels. Anisotropic wet etching may also be used to create the sumps 12. Anisotropic wet etching, however, requires a specific type of substrate 11. For example, the substrate 11 must be crystalline and etching occurs along a specific axis.

In fabricating the sample holder 10 by an etching process, a substrate 11 is first provided. In one embodiment, the substrate 11 comprises a conductive material. A conductive substrate, or one permitting flow of charge to or from the sample, for example, is suitable for fabricating a MALDI sample holder. A substrate can be made conductive by coating an inorganic or organic substrate with a conductive material. For example, gold may be sputtered onto a nonconductive substrate. Alternatively, the substrate 11 may comprise a metal, a glass, a plastic or any other material suitable for supporting a sample. The substrate 11 is patterned to designate areas to be etched. The patterned substrate 11 is etched to create the islands 14 and the sumps 12. For the embodiments in which the sample holder 30 comprises a first and a second group of interconnected sumps 32, 34 as shown in Figures 3A, 3B and 3C, both a first and a second surface of the substrate 11 are patterned and etched. For the embodiments in which the sumps 12 comprise at least one hole 5 for draining as shown in Figure 2B, an additional etching step may be performed to create the holes 5. For example, holes having dimensions of approximately 10 microns by 10 microns may be etched through the thickness of a substrate having a thickness in the range of from about 25 microns to about 100 microns, using LIGA or deep reactive ion etching techniques.

In another embodiment, the islands 14 are grown on the substrate 11 using a microfabrication deposition technology well known in the art. Alternately, the islands 14 are created using a technique referred to as the "poor man's LIGA". According to this technique, a 30-50 micron thick layer of photoresist is placed on a substrate 11, patterned as in a conventional lithography to define islands 14 and sumps 12, and washed with a solvent. Areas in which the photoresists has been washed away define sumps 12 and remaining photoresist structures define islands 14. In still another embodiment, the islands 14 may be fabricated independently and subsequently bonded to the substrate 11.

In one embodiment, the sample support surfaces 13 include a surface coating designed, for example, to enhance sample adhesion to the support surfaces 13 to provide for selective adsorption of samples in various regions of the holder, or to change surface properties such as wetting properties of the surfaces 13. For example, cationic or anionic moities, chelators, organic molecules including complex sugars and heparin, binding proteins such as antibodies, avidin, etc., hydrophobic coatings (e.g. octadecyl silane) may enhance sample adhesion or selectivity on the sample support surfaces 13. These may take the form of adhered coating material bonded or simply adsorbed onto surfaces 13 and may be in any form including gels, fimbriae and arborial coatings. The coating layer may be as thin as a few angstroms and as thick as desired. Any coating technology known (or hereinafter discovered) by those skilled in the art may be used to coat the sample support surfaces 13. The particular coating technology exploited for coating the sample support surfaces 13 does not constitute an aspect of the present invention as currently understood.

In another embodiment, the surfaces comprise a MALDI matrix of a type known per se, ready to receive a sample for analysis in a MALDI mass spectrometer.

In one embodiment, the sample support surfaces 13 are smooth. In another embodiment, the sample support surfaces 13 are irregular. An irregular surface increases the surface area, and thereby increases the amount of sample placed on the surface. Irregular surfaces also enhance adhesion of the sample onto the sample support surfaces 13 by improving physical bonding between the samples and the surfaces 13. A variety of methods can make the sample support surfaces 13 irregular. In one exemplary embodiment, multiple etching steps may be performed to create sumps having varying depth. The first etching step may create sub-sumps that are 10 micron deep and the second etching step may create sumps that are 100 microns deep, such that each island 14 comprises a plurality of sub-sumps making the sample support surface on the island 14 irregular. In another exemplary embodiment, an organic coating such as fimbriated organic coating is applied on the sample support surfaces 13. A fimbriated organic coating may increase the loading capacity by three to five times. In still another exemplary embodiment, the sample support surfaces 13 are etched in an anodization process to create pores that have depth of 1-2 microns, diameter of 10 - 500 angstroms, porosity of 50-70% and surface area of greater than 100 m²/g. The anodization process is described in L.T. Canham, "Bioactive Silicon Structure Fabrication Through Nanoetching Techniques", *Advanced Materials,* 7:1033 (1995).

In one embodiment, the gutter or sump 12 surfaces may be treated to modify the wetting properties of these surfaces. In order to improve wettability and thereby allow samples to spread and collect at the bottom of the sumps 12, the sump surfaces may be coated, for example, with a surfactant or a hydrophobic substance. Any surface treatment technology known (or hereinafter discovered) by those skilled in the art may be used to modify the wetting properties of the sump surfaces. The particular method of modifying wetting properties of the sump surfaces does not constitute an aspect of the present invention.

The sample holder 10 of the present invention may be used to support a large number of densely placed samples for use in a chemical analysis or a biological synthesis.

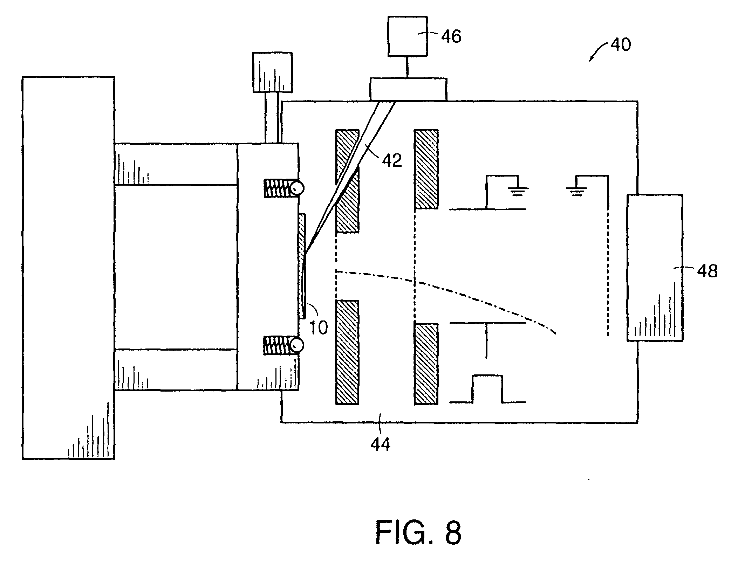

Referring to Figure 8, the sample holder 10 of the present invention is used as a sample plate in a MALDI apparatus 40. A MALDI apparatus 40 comprises a vacuum chamber 44, a sample holder 10 placed inside the chamber 44 for holding a multiplicity of samples, a laser source 46, and a mass spectrometer 48. The laser source 46 generates a laser beam 42 for striking an addressed sample on a selected sample support surface 13 to desorb and ionize sample molecules disposed therein. The mass spectrometer 48 analyzes serially the multiplicity of samples by detecting the desorbed and ionized sample molecules at a corresponding multiplicity of islands. The sample holder 10 allows placement of a large number of samples that are physically separated from each other on a small surface. For example, a sample holder 10 having a dimension of 2 inches by 2 inches (4,4 x 4.4 cm) may support as many as 250,000 samples (or more), each sample being effectively isolated on a sample support surface 13 of an island 14 or a group of such support surfaces. The dimensions chosen for the sample support surface 13 can depend in part on the diameter of the laser beam 42 impinging on a sample. In one embodiment, each sample support surface 13 has an area approximately equal to or slightly less than the area of the laser beam 42, such that substantially all of the sample placed on the support structure 14 is illuminated by the laser beam 42 when the address is accurately specified. The diameter of a typical laser beam 42 currently used in MALDI analysis is approximately 100 µm². However, it is possible to reduce the laser beam diameter to about 5 µm². Alternatively, a small area laser beam may be used to desorb and ionize species on an addressed island in multiple locations. In another embodiment, a sample support surface 13 is fabricated to have a small surface in order to concentrate a sample on the sample support surface 13. During a drying stage of sample preparation, the sample can spread to wherever there is the liquid matrix. Therefore, on a larger surface, the sample can spread to a wider area creating a less concentrated sample, while on a smaller surface, the sample spreads to a narrower area creating a more concentrated sample. Concentrated sample can lead to MALDI spectra with better resolution.

In addition, the sample holder 10 allows identification of each sample location on the sample holder 10, such that each sample is selectively addressable. In this manner, MALDI analysis can be performed selectively on a desired sample. The sample position relative to the laser beam 42 can be adjusted in a variety of ways. In one embodiment, the sample holder 10 is placed on an x-y table and the x-y position is controlled by one or more stepper motors conventionally used with x-y tables. With computer control of the stepper motors, this system allows any selected point on the sample holder 10 to be positioned precisely on the optical path of the laser beam 42. In another embodiment, conventional optics are used to alter the direction of the laser beam 42 relative to the sample holder 10, thereby allowing different sample support surfaces 13 to be irradiated. Methods for varying sample position or laser beam position are well known in the art and are not aspects of the present invention.

The depth, width, and length of the sumps 12 depend on numerous factors including desired sample density on the sample holder 10, sample volume placed on each sample support surface 13, and minimum incremental distance at which the laser beam can be maneuvered relative to the sample support surfaces 13. A narrower sump 12 (or shorter distance between adjacent islands 14) allows for a greater number of islands 14 to be created on a sample holder 10. However, a shorter distance between islands 14 also results in a smaller sump volume, unless the sump 12 can be made deep. A short distance between islands 14 may also allow viscous liquids to bridge the channel between adjacent island 14. Current microfabrication technologies allow creation of channels having an aspect ratio of up to about 100. An aspect ratio refers to ratio of a depth to a width of a channel, where the depth is a dimension perpendicular to a substrate and the width is a shortest dimension parallel to the substrate. Current typical microfabrication technology allows resolution in the production of masks and etching to about 0.1 µm. Therefore, the lower limitation on a channel width is approximately 0.5 ± 0.1 µm. Since, sump dimensions are limited by fabrication limitations and not design, sumps 12 having greater aspect ratios are expected as fabrication technologies advance. In embodiments where the sumps 12 have drain holes 5, efficient removal of the transported samples preclude the need for deeper and wider sumps. However, in embodiments having sumps 12 without the drain holes 5, the sumps 12 must be large enough and deep enough to keep diffused samples from reaching other samples placed on adjacent sample support surfaces 13.

MALDI analysis using the sample holder 10 of the present invention provide rapid analysis of a large number of samples by allowing a multiplicity of samples to be placed on a small surface without diffusing into each other. In one embodiment, the analysis for a sample takes less than approximately a second, where each analysis comprising impinging the sample with greater than approximately 10 pulses of laser beams. In another embodiment, the analysis for a sample takes less than approximately 100 msec, where each analysis comprises impinging the sample with approximately 100 pulses of laser beams.

Physically separated distinguishable samples may be loaded on the sample holder 10 using a variety of methods. In one embodiment, the samples separated using two dimensional gel electrophoresis, are loaded onto the sample holder 10 using electroblotting or elution.

Two dimensional gel electrophoresis involves two sequential separations performed orthogonally in a gel media typically exploiting two distinct separation criteria, e.g. isoelectric focusing followed by gel electrophoresis. Isoelectric focusing separates proteins according to charge and gel electrophoresis separates proteins using molecular size. The two dimensional gel electrophoresis creates a two dimensional pattern of spots, each spot typically consisting of a specific protein. Two-dimensional electrophoresis is well known in the art.

Electroblotting involves transfer of proteins from the gel onto another surface using an electric current to drive their migration in a manner similar to the original electrophoresis, but in a perpendicular direction. Electroblotting is well known in the art. Standard dot blotting also may be used if the surfaces 13 of the holder are treated to adsorb or absorb a sample.

For the electroblotting embodiment, the sample holder 10 may comprise a multiplicity of electrodes, microfabricated during manufacture of the holder 10 using conventional solid state circuit microfabrication techniques, which permit one to selectively electroblot a biological sample that is pre-separated into a two dimensional field, e.g. by 2D electrophoresis. Each surface 13 or a subset thereof, may be designed to be addressed individually so as to electrically attract sample, or not, as desired. The proteins or other molecules are selectively electroblotted onto the sample support surfaces 13, such that each is disposed on a sample support surface 13.

In one electroblotting embodiment, the sample support surfaces 13 of the sample holder 10 may comprise a sputtered gold layer, which performs as the electrodes, and a hydrophobic coating layer comprising a mixture of CH₃(CH₂)₇SH and HS-CH₂CO₂H, disposed above the gold layer. The mixture provides holes in the hydrophobic coating such that current may reach the gold layer surface. Blotting occurs by applying voltage to the gold layer. In a preferred embodiment, the blotting takes placed in a chamber under Helium pressure. This environment dissolves gas created by electrolysis at the gold surface, which would otherwise impede electrophoresis. In another blotting embodiment, the sample holder 10 comprises a silica plate coated with C₁₈. The silica plate has holes that extend through the thickness of the plate, located approximately every 100 microns. The gel comprising separated proteins is disposed over the silica plate, and a voltage is applied across the rear surface of the sample holder 10 and the gel. The sample 10 holder has metal leads microfabricated on the rear surface. As proteins travel laterally to reach the holes, they contact the sample support surfaces 13 and adsorb thereto. A completely flat surface would create circles of analytes around the holes.

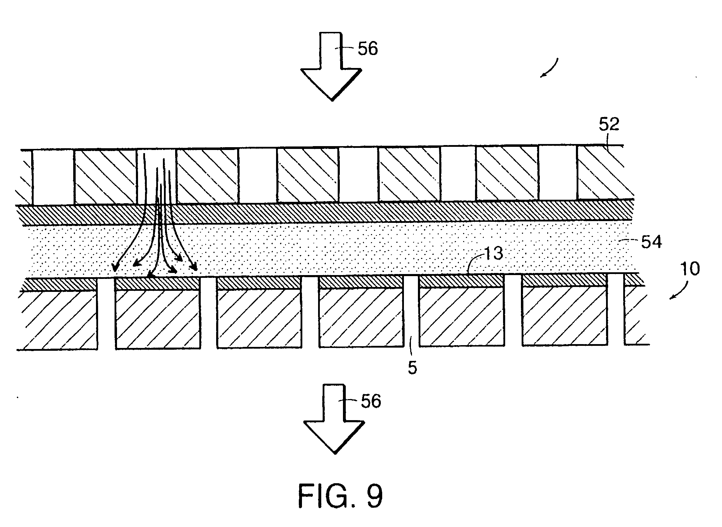

Figure 9 illustrates elution of samples from a two dimensional gel 54 to the sample holder 10 of the present invention. A grid 52 supporting a two dimensional gel 54 comprising separated biopolymer molecules is disposed over a sample holder 10. A solution 56 passes through the grid 52 and the sample holder 10 to selectively elute and transfer separated biopolymer molecules onto support surfaces 13 of the sample holder 10. The solution 56 drains away from the sample holder 10 by passing through the sumps 12 and the holes 5.

Alternatively, a microscopic dot printer can load the samples onto the sample support surfaces 13. In one embodiment, the microscopic printing mechanism includes a robotically controlled dispenser moving from one sample support surface 13 to another surface 13 on the sample holder 10, depositing a desired sample at each sample support surface 13. For example, a dispenser may include a micropipette that contains a sample, and a robotic system that controls the position of the micropipette relative to the sample holder 10. The dispenser may include a series of micropipettes or an array of micropipettes to deliver multiple samples. In another embodiment, the dispenser comprises an ink jet printing device. Any appropriate means of loading a sample or samples onto the sample holder 10 that is known in the art may be used in accordance with the present invention. U.S. Patent 5,599,695, describes a variety of microscopic printing mechanisms.

In other embodiments, the sample holder 10 also may be used as a substrate in proteomic or genomic research. The terms "proteomics" or "genomics", as used herein refer to the science of proteins or DNAs to synthesize or to study multiple different substances more or less simultaneously. The sample holder 10 of the present invention permits selective analysis or synthesis of a sample of a multiplicity of samples placed on a single substrate. The sample holder 10 further permits repeat addressing of a sample disposed on a sample support surface 13 for multiple analysis.

In one embodiment, a two dimensional gel electrophoresis first separates biological polymers in a complex sample and the separated polymers are blotted onto the sample holder 10 of the present invention. Either before or after blotting, each polymer is digested to create multiple fragments of each biopolymer, e.g., a ladder sequence. The separated fragmented proteins or DNAs are then analyzed in one of numerous ways, such as mass spectrometry, to determine, for example, their sequence.

In another embodiment, the sample holder 10 of the present invention is used as a chemistry substrate for fabricating a library of polymers (e.g., PNAs), and more specifically, a library of biopolymers. The biopolymers, for example include but are not limited to, peptides, oligonucleotides, and organic molecules. A library of biopolymers, for example, may be fabricated by first placing a multiplicity of reactants on the sample support surfaces such that each reactant is disposed on one or a few adjacent sample support surfaces 13. The reactants then are exposed to different monomers, which potentially interacts with the reactants. The reactants, for example, may be linker molecules. In this manner, a different chemical reaction may be created at each sample support surface 13 at will. An array comprising a library of biopolymers can be used in an analysis process such as hybridization or drug screening. U.S. Patent No. 5,605,662, describes microelectronic systems for carrying out molecular biological reactions, such as nucleic acid hybridization, antibody/antigen reactions, clinical diagnostics and biopolymer synthesis.

In still another embodiment, the sample holder 10 comprises libraries of unimolecular, double-stranded oligonucelotides formed on the sample support surfaces 13. The double-stranded oligonucleotides may be formed by first placing a first portion of an oligonucleotide on a sample support surface 13 and subsequently exposing the first portion to a second portion of the oligonucleotide. These libraries are useful in pharmaceutical discovery for the screening of numerous biological samples for specific interactions between the double-stranded oligonucelotides and peptides, proteins, drugs and RNA. U.S. Patent No. 5,556,752, describes fabrication of unimolecular-double-stranded oligonucleotides on a substrate.

It is understood that the embodiments shown are exemplary and that it is intended to limit the scope of the invention only by the scope of the appended claims.

## Claims

1. A sample holder comprising
a substrate (11) having a multiplicity of islands (14) defining sample support surfaces (13) and at least one sump (12) which separates adjacent surfaces (13) and inhibits transport of samples between adjacent surfaces (13),
**characterized in that**
said substrate (11) is a microfabricated substrate (11) defining multiplicity of microscopic islands (14) protruding from the substrate (11).

2. The sample holder of claim 1 wherein the at least one sump (12) comprises a plurality of interconnected sumps (12) forming a gutter for drainage.

3. The sample holder of claim 1 wherein the at least one sump (12) comprises at least one hole (37) that runs substantially perpendicular to and through the substrate (11).

4. The sample holder of claim 2 wherein the substrate (11) comprises a first surface and a second surface and the plurality of interconnected sumps (12) comprises a first group of interconnected sumps (32), the sample support surfaces (13) and the first group of interconnected sumps (32) disposed on the first surface of the substrate (11), and wherein the sample holder further comprises a second group of interconnected.sumps (34) disposed on the second surface of the substrate (11) and offset from the first group of interconnected sumps (32) to create a plurality of vertical holes (37) that extend through the substrate (11) where the first group of interconnected sumps (32) intersect with the second group of interconnected sumps (34).

5. The sample holder of claim 1 wherein the microscopic islands (14) are geometrically non-uniform.

6. The sample holder of claim 1 wherein at least one island of the multiplicity of islands (14), comprises sub-islands (22) separated by at least one sub-sump (24) disposed on the sample support surface.

7. The sample holder of claim 1 wherein the multiplicity of islands (14) comprises concentrically disposed circles of islands (14).

8. The sample holder of claim 1 wherein the sample support surfaces (13) are irregular to increase the surface area.

9. The sample holder of claim 1 wherein the substrate (11) comprises a conductive material permitting ionization of a sample disposed thereon.

10. The sample holder of claim 1 wherein the sample support surfaces (13) comprise a coating layer.

11. The sample holder of claim 1 further comprising a plurality of samples for an analysis, with each sample disposed on a sample support surface.

12. The sample holder of claim 1 further comprising an electrode disposed on the substrate (11) in electrical communication with a microscopic island to permit electroblotting of a sample onto the sample support surface.

13. The sample holder of claim 1 further comprising a plurality of reactants, wherein each reactant is disposed on a sample support surface for carrying out a biological reaction.

14. The sample holder of claim 1 further comprising a polymer disposed on a sample support surface.

15. The sample holder of claim 14 wherein the polymer is a biopolymer.

16. The sample holder of claim 14 wherein the polymer comprises a single stranded nucleotide probe.

17. A system for rapid analysis of a plurality of samples comprising:
a vacuum controllable chamber (44);
a sample holder (10) for disposition within the chamber for holding a plurality of samples,
the sample holder according to any of claims 1 to 16;
a laser apparatus (46) which generates and directs a laser beam for striking a sample on a sample support surface to desorb and ionize sample molecules therefrom; and
a mass spectrometer (48) for analyzing samples on the sample holder by detecting the mass thereof subsequent to desorption and ionization.

18. The system of claim 17 further comprising a mechanism for moving the sample holder (10) relative to the laser beam such that each sample support surface may be struck by a stationary laser beam.

19. The system of claim 17 wherein each sample support surface has a surface area that is approximately equal to or smaller than a diameter of the laser beam striking each sample.

20. A method for analyzing a biological sample comprising:
a) providing a sample holder according to any of claims 1 to 16;
b) placing a plurality of samples in contact with said sample support surfaces (13); and
c) performing an analysis step on the biological sample.

21. The method of claim 20 wherein step b) comprises placing a biological sample in contact with a sample support surface.

22. The method of claim 20 wherein step c) comprises detection by mass spectrometry.

23. The method of claim 20 wherein step b) comprises blotting separated proteins in the two dimensional gel onto the sample support surfaces (13).

24. The method of claim 20 wherein step b) comprises printing the multiplicity of biological samples onto the sample support surfaces (13) using a microscopic printing process.

25. The method of claim 24 wherein the microscopic printing process comprises dispensing each sample in the multiplicity of samples, separately contained in a multiplicity of micropipettes, on a selected sample support surface using a robotic system capable of maneuvering the position of the micropipettes relative to the sample support surfaces (13).

26. The method of claim 20 wherein step c) comprises an immunoassay.

27. The method of claim 20 further comprising fabricating a. library of polymers on the sample holder such that each polymer is disposed on a sample support surface.

28. The method of claim 20 wherein each surface of the sample support surfaces (13) is separately addressable and step c) comprises selectively performing an analysis on a desired sample support surface.

29. The method of claim 28 wherein each surface of the sample support surfaces (13) is repeatedly addressable for selectively forming an analysis.

## Patentansprüche

1. Probenhalter mit
einem Substrat (11), das eine Vielzahl Inseln (14), die Probenträgeroberflächen (13) festlegen, und mindestens einem Sumpf bzw. Wanne (12), der benachbarte Oberflächen (13) trennt und den Transport von Proben zwischen benachbarten Oberflächen (13) sperrt, aufweist,
**dadurch gekennzeichnet, dass**
das Substrat (11) ein mikrogefertigtes Substrat (11) ist, das die Vielzahl mikroskopischer Inseln (14) festlegt, die von dem Substrat (11) vorstehen.

2. Probenhalter gemäß Anspruch 1, bei dem der mindestens eine Sumpf (12) eine Mehrzahl untereinander verbundener Sümpfe (12) umfasst, die eine Rinne zur Drainage bilden.

3. Probenhalter gemäß Anspruch 1, bei dem der mindestens eine Sumpf (12) mindestens ein Loch (37) umfasst, das im wesentlichen senkrecht zu und durch die Oberfläche (11) läuft.

4. Probenhalter gemäß Anspruch 2, bei dem das Substrat (11) eine erste Oberfläche und eine zweite Oberfläche umfasst, und bei dem die Mehrzahl untereinander verbundener Sümpfe (12) eine erste Gruppe von untereinander verbundenen Sümpfen (32), die Probenträgeroberflächen (13) und die an der ersten Oberfläche des Substrats (11) angeordnete erste Gruppe von untereinander verbundenen Sümpfen (32) umfasst, und wobei der Probenhalter ferner eine zweite Gruppe von untereinander verbundenen Sümpfen (34) umfasst, die auf der zweiten Oberfläche des Substrats (11) angeordnet und von der ersten Gruppe der untereinander verbundenen Sümpfe (32) versetzt sind, um eine Mehrzahl vertikaler Löcher (37) zu erzeugen, die sich durch das Substrat (11) erstrecken, wobei die erste Gruppe von untereinander verbundenen Sümpfen (32) die zweiten Gruppe von untereinander verbundenen Sümpfen (34) kreuzt.

5. Probenhalter gemäß Anspruch 1, bei dem die mikroskopischen Inseln (14) geometrisch ungleichmäßig sind.

6. Probenhalter gemäß Anspruch 1, bei dem mindestens eine Insel der Vielzahl Inseln (14) Sub-Inseln (22) umfasst, die durch mindestens einen an der Probenträgeroberfläche angeordneten Sub-Sumpf (24) getrennt sind.

7. Probenhalter gemäß Anspruch 1, bei dem die Vielzahl Inseln (14) konzentrisch angeordnete Kreise von Inseln (14) umfasst.

8. Probenhalter gemäß Anspruch 1, bei dem die Probenträgeroberflächen (13) unregelmäßig sind, um die Oberfläche zu vergrößern.

9. Probenhalter gemäß Anspruch 1, bei dem das Substrat (11) ein leitendes Material umfasst, das eine Ionisierung einer darauf angeordneten Probe ermöglicht.

10. Probenhalter gemäß Anspruch 1, bei dem die Probenhalteroberflächen (13) eine Überzugsschicht umfassen.

11. Probenhalter gemäß Anspruch 1, ferner mit einer Mehrzahl Proben für eine Analyse, wobei jede Probe auf einer Probenträgeroberfläche angeordnet ist.

12. Probenhalter gemäß Anspruch 1, ferner mit einer Elektrode, die auf dem Substrat (11) in elektrischer Verbindung mit einer mikroskopischen Insel angeordnet ist, um Elektro-Blotting einer Probe auf der Probenträgeroberfläche zu ermöglichen.

13. Probenhalter gemäß Anspruch 1, ferner mit einer Mehrzahl Reaktionsteilnehmer, wobei jeder Reaktionsteilnehmer auf einer Probenträgeroberfläche zum Ausführen einer biologischen Reaktion angeordnet ist.

14. Probenhalter gemäß Anspruch 1, ferner mit einem auf einer Probenträgeroberfläche angeordneten Polymer.

15. Probenhalter gemäß Anspruch 14, bei dem das Polymer ein Biopolymer ist.

16. Probenhalter gemäß Anspruch 14, bei dem das Polymer eine Einzelstrang-Nukleotidsonde umfasst.

17. System zur schnellen Analyse einer Mehrzahl Proben mit:
einer Kammer (44) mit gesteuertem Unterdruck;
einem Probenhalter (10) zur Anordnung innerhalb der Kammer zum Halten einer Mehrzahl Proben,
dem Probenhalter gemäß einem der Ansprüche 1 bis 16;
einer Laservorrichtung (46), die einen Laserstrahl zum Treffen eine Probe auf einer Probenträgeroberfläche erzeugt und richtet, um Probenmoleküle zu desorbieren und ionisieren; und
einem Massenspektrometer (48) zum Analysieren von Proben auf dem Probenhalter durch Erfassen deren Masse nach der Desorption und Ionisation.

18. System gemäß Anspruch 17, ferner mit einem Mechanismus zum Bewegen des Probenhalters (10) mit Bezug auf den Laserstrahl, so dass jede Probenträgeroberfläche von einem stationären Laserstrahl getroffen werden kann.

19. System gemäß Anspruch 17, bei dem jede Pröbenträgeroberfläche einen Oberflächenbereich aufweist, der ungefähr gleich oder kleiner als ein Durchmesser des Laserstrahls ist, der jede Probe trifft.

20. Verfahren zum Analysieren einer biologischen Probe mit:
a) Bereitstellen eines Probenhalters gemäß einem der Ansprüche 1 bis 16;
b) Platzieren einer Mehrzahl Proben in Kontakt mit den Probenträgeroberflächen (13); und
c) Durchführen eines Analyseschrittes an der biologischen Probe.

21. Verfahren gemäß Anspruch 20, bei dem der Schritt b) ein Plazieren einer biologischen Probe in Kontakt mit einer Probenträgeroberfläche umfasst.

22. Verfahren gemäß Anspruch 20, bei dem der Schritt c) eine Erfassung durch Massenspektrometrie umfasst.

23. Verfahren gemäß Anspruch 20, bei dem der Schritt b) ein Blotting der getrennten Proteine in dem zweidimensionalen Gel auf den Probenträgeroberflächen (13) umfasst.

24. Verfahren gemäß Anspruch 20, bei dem der Schritt b) ein Drucken der Vielzahl biologischer Proben auf den Probenträgeroberflächen (13) mittels eines mikroskopischen Druckverfahrens umfasst.

25. Verfahren gemäß Anspruch 24, bei dem das mikroskopische Druckverfahren ein Ausgeben jeder Probe in der Vielzahl Proben umfasst, die getrennt in einer Vielzahl Mikropipetten enthalten sind, auf einer ausgewählten Probenträgeroberfläche mittels eines Robotersystems, das im Stande ist, die Position der Mikropipetten bezüglich der Probenträgeroberflächen (13) zu manövrieren.

26. Verfahren gemäß Anspruch 20, bei dem der Schritt c) ein Immunoassay umfasst.

27. Verfahren gemäß Anspruch 20, ferner mit Anfertigen einer Bibliothek von Polymeren auf dem Probenhalter, so dass jedes Polymer auf einer Probenträgeroberfläche angeordnet ist.

28. Verfahren gemäß Anspruch 20, bei dem jede Oberfläche der Probenträgeroberflächen (13) getrennt adressierbar ist, und der Schritt c) ein selektives Durchführen einer Analyse auf einer gewünschten Probenträgeroberfläche umfasst.

29. Verfahren gemäß Anspruch 28, bei dem jede Oberfläche der Probenträgeroberflächen (13) zum selektiven Bilden einer Analyse wiederholt adressierbar ist.

## Revendications

1. Porte-échantillons comprenant
un substrat (11) ayant une multiplicité d'îlots (14) définissant des surfaces (13) de support d'échantillons et au moins un puits (12) qui sépare des surfaces (13) voisines et empêche le transport d'échantillons entre des surfaces (13) voisines,
**caractérisé en ce que**
le substrat (11) est un substrat (11) microfabriqué définissant une multiplicité d'îlots (14) microscopiques en saillie du substrat (11).

2. Porte-échantillons suivant la revendication 1, dans lequel le au moins un puits (12) comprend une pluralité de puits (12) interconnectés formant une gouttière de drainage.

3. Porte-échantillons suivant la revendication 1, dans lequel le au moins un puits (12) comprend au moins un trou (37) qui court sensiblement perpendiculairement au substrat (11 ) et le traverse.

4. Porte-échantillons suivant la revendication 2, dans lequel le substrat (11) comprend une première surface et une deuxième surface et la pluralité de puits (12) interconnectés comprend un premier groupe de puits (32) interconnectés, les surfaces (13) de support d'échantillons et le premier groupe de puits (32) interconnectés disposés sur la première surface du substrat (11), et dans lequel le porte-échantillons comprend, en outre, un deuxième groupe de puits (34) interconnectés disposés sur la deuxième surface du substrat (11) et décalé du premier groupe de puits (32) interconnectés pour créer une pluralité de trous (37) verticaux qui passent à travers le substrat (11), là où le premier groupe de puits (32) interconnectés est en intersection avec le deuxième groupe de puits (34) interconnectés.

5. Porte-échantillons suivant la revendication 1, dans lequel les îlots (14) microscopiques ne sont pas uniformes géométriquement.

6. Porte-échantillons suivant la revendication 1, dans lequel au moins un îlot de la multiplicité d'îlots (14) comprend des sous-îlots (22) séparés par au moins un sous-puits (24) disposé sur la surface de support d'échantillon.

7. Porte-échantillons suivant la revendication 1, dans lequel la multiplicité d'îlots (14) comprend des cercles disposés concentriquement d'îlots (14).

8. Porte-échantillons suivant la revendication 1, dans lequel les surfaces (13) de support d'échantillons sont irrégulières pour augmenter la surface spécifique.

9. Porte-échantillons suivant la revendication 1, dans lequel le substrat (11) comprend une matière conductrice permettant une ionisation d'un échantillon placé dessus.

10. Porte-échantillons suivant la revendication 1, dans lequel les surfaces (13) de support d'échantillons comprennent une couche de revêtement.

11. Porte-échantillons suivant la revendication 1 comprenant, en outre, une pluralité d'échantillons pour une analyse, chaque échantillon étant placé sur une surface de support d'échantillon.

12. Porte-échantillons suivant la revendication 1 comprenant, en outre, une électrode placée sur le substrat (11) en communication électrique avec un îlot microscopique pour permettre une électroanalyse par empreinte d'un échantillon sur la surface de support d'échantillon.

13. Porte-échantillons suivant la revendication 1 comprenant, en outre, une pluralité de réactifs, chaque réactif étant placé sur une surface de support d'échantillon pour effectuer une réaction biologique.

14. Porte-échantillons suivant la revendication 1 comprenant un polymère disposé sur une surface de support d'échantillon.

15. Porte-échantillons suivant la revendication 14, dans lequel le polymère est un biopolymère.

16. Porte-échantillons suivant la revendication 14, dans lequel le polymère comprend une sonde de nucléotide monobrin.

17. Système d'analyse rapide d'une pluralité d'échantillons comprenant :
une chambre (44) dont on peut se rendre maître de la mise sous vide ;
un porte-échantillons (10) destiné à être placé dans la chambre afin de porter une pluralité d'échantillons,
le porte-échantillons étant conforme à l'une quelconque des revendications 1 à 16 ;
un dispositif (46) à laser qui engendre et dirige un faisceau laser sur un échantillon pour en désorber et en ioniser des molécules de l'échantillon ; et
un spectromètre (48) de masse destiné à analyser des échantillons sur le porte-échantillons en en détectant la masse après une désorption et une ionisation.

18. Système suivant la revendication 17 comprenant, en outre, un mécanisme destiné à déplacer le porte-échantillons (10) par rapport au faisceau laser, de façon à ce que chaque surface de support d'échantillon puisse être frappée par un faisceau laser fixe.

19. Système suivant la revendication 17, dans lequel chaque surface de support d'échantillon a une surface spécifique qui est à peu près égale ou inférieure à un diamètre du faisceau laser frappant chaque échantillon.

20. Procédé d'analyse d'un échantillon biologique consistant :
a) à prévoir un porte-échantillons suivant l'une quelconque des revendications 1 à 16 ;
b) à placer une pluralité d'échantillons en contact avec les surfaces (13) de support d'échantillons ; et
c) à effectuer un stade d'analyse sur l'échantillon biologique.

21. Procédé suivant la revendication 20, dans lequel le stade b) consiste à placer un échantillon biologique en contact avec une surface de support d'échantillon.

22. Procédé suivant la revendication 20, dans lequel le stade c) consiste à effectuer une détection par spectrométrie de masse..

23. Procédé suivant la revendication 20, dans lequel le stade b) consiste à analyser par empreinte des protéines distinctes dans le gel en deux dimensions sur les surfaces (13) de support d'échantillons.

24. Procédé suivant la revendication 20, dans lequel le stade b) consiste à imprimer la multiplicité d'échantillons biologiques sur les surfaces (13) de support d'échantillons en utilisant une opération d'impression microscopique.

25. Procédé suivant la revendication 24, dans lequel l'opération d'impression microscopique consiste à répartir chaque échantillon de la multiplicité d'échantillons contenus séparément dans une multiplicité de micropipettes sur une surface de support d'échantillon sélectionnée, en utilisant un système robotique apte à régler la position des micropipettes par rapport aux surfaces (13) de support d'échantillon.

26. Procédé suivant la revendication 20, dans lequel le stade c) consiste en un dosage d'immunologie.

27. Procédé suivant la revendication 20 qui consiste, en outre, à fabriquer une bande de polymère sur le porte-échantillons, de façon à ce que chaque polymère soit placé sur une surface de support d'échantillon.

28. Procédé suivant la revendication 20, dans lequel chacune des surfaces (13) du porte-échantillons peut être adressée séparément, et le stade c) consiste à effectuer sélectivement une analyse sur une surface souhaitée de support d'échantillon.

29. Procédé suivant la revendication 28, dans lequel chaque surface (13) de support d'échantillon peut être adressée de manière répétée pour former sélectivem
